(19) Europäisches Patentamt
European Patent Office
Office européen des brevets

(11) **EP 2 031 417 A1**

(12) **EUROPÄISCHE PATENTANMELDUNG**

(43) Veröffentlichungstag:
**04.03.2009 Patentblatt 2009/10**

(51) Int Cl.:
**G01S 13/38** (2006.01)     **G01S 7/35** (2006.01)
**G01S 7/288** (2006.01)

(21) Anmeldenummer: **08163230.9**

(22) Anmeldetag: **29.08.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **30.08.2007 DE 102007042955**

(71) Anmelder: **BALLUFF GmbH**
**73765 Neuhausen (DE)**

(72) Erfinder:
• **Fericean, Sorin Dr.**
**71229 Leonberg (DE)**

• **Dorneich, Albert**
**73760 Ostfildern (DE)**
• **Droxler, Reinhard**
**72800 Eningen (DE)**
• **Kräter, Daniel**
**75223 Niefern (DE)**
• **Fend, Norbert**
**9492 Eschen (LI)**

(74) Vertreter: **Hoeger, Stellrecht & Partner**
**Patentanwälte**
**Uhlandstrasse 14 c**
**70182 Stuttgart (DE)**

(54) **Mikrowellen-Näherungssensor und Verfahren zur Bestimmung des Abstands zwischen einem Zielobjekt und einem Messkopf eines Mikrowellen-Näherungssensors**

(57)     Mikrowellen-Näherungssensor, umfassend einen Messkopf, an welchem ein Sender für Mikrowellenstrahlung und ein Empfänger für Mikrowellenstrahlung angeordnet sind, wobei an einem Zielobjekt reflektierte Mikrowellenstrahlung, welche von dem Sender auf das Zielobjekt emittiert wurde, von dem Empfänger empfangbar ist, eine Auswertungseinrichtung, durch welche ein Abstand vom Zielobjekt zu dem Messkopf durch interferometrische Auswertung der empfangenen Mikrowellenstrahlung und der emittierten Mikrowellenstrahlung bestimmbar ist, und einen Phasenschieber, mittels welchem aus einem Sendesignal ein erstes Signal und ein dazu in der Phase verschobenes zweites Signal erzeugbar ist.

Fig. 1

EP 2 031 417 A1

**Beschreibung**

Die Erfindung betrifft einen Mikrowellen-Näherungssensor mit einem Messkopf, an welchem ein Sender für Mikrowellenstrahlung und ein Empfänger für Mikrowellenstrahlung angeordnet sind.

Die Erfindung betrifft ferner ein Verfahren zur Bestimmung des Abstands zwischen einem Zielobjekt und einem Messkopf eines Mikrowellen-Näherungssensors.

Über Mikrowellen-Näherungssensoren lässt sich die Position bzw. die Annäherung eines Zielobjekts (Targets) detektieren, wenn das Zielobjekt elektrisch leitend ist oder eine genügend große Dielektrizitätskonstante aufweist. Es ist dabei eine berührungslose Detektierbarkeit ermöglicht. Beispielsweise lassen sich auch Glasgegenstände detektieren. Magnetische Eigenschaften des Gegenstands beeinflussen das Detektionsergebnis nicht. Es lässt sich eine Positionsdetektion und/oder Wegdetektion durchführen, die im Wesentlichen unabhängig vom Material des zu detektierenden Gegenstands ist.

Aus der DE 10 2004 062 801 A1 ist ein Hochfrequenz-Positions-/Wegsensor zur Detektion der Annäherung eines Gegenstands mit einem Detektionsbereich in einem Nahfeld bekannt, welcher einen Hochfrequenzsender und einen Hochfrequenzempfänger umfasst, wobei der Hochfrequenzsender und der Hochfrequenzempfänger so angeordnet und ausgebildet sind, dass eine Hauptsenderichtung und eine Hauptempfangsrichtung in einem Winkel zueinander liegen.

Aus der DE 198 33 220 A1 ist eine Abstandsmessvorrichtung mit einer Sensoreinrichtung und einer Auswerteelektronik bekannt, bei der die Sensoreinrichtung zumindest eine Koppelsonde zur Einspeisung eines Sendesignals in eine Leitungsstruktur aufweist.

Aus der DE 102 05 904 ist eine Abstandsmessvorrichtung mit einer Auswerteelektronik und einer Sensoreinrichtung bekannt, die zumindest eine Koppelsonde zur Einspeisung eines Sendesignals in eine Leitungsstruktur mit Reflexionskörper aufweist, bei der die Leitungsstruktur einen Einspeiseblock mit einem Einspeisungsbereich aufweist, der einen HF-Transceiver über einen Wellenleiter mit dielektrischem Haltesystem mit der Koppelsonde verbindet.

Aus der DE 199 03 183 A1 ist eine Abstandsmessvorrichtung mit einem Sensor und einer Auswerteelektronik bekannt, bei der der Sensor als Antenne einen einseitig offenen Hohlleiter aufweist, dessen offene Seite mit einem Dämpfungsglied abgeschlossen ist.

Aus der DE 198 07 593 A1 ist eine Abstandsmessvorrichtung mit einem Sensor und einer Auswerteelektronik bekannt, bei der der Sensor einen Resonator in Form eines Hohlraumresonators aufweist.

Aus der EP 1 000 314 B1 ist eine Abstandsmessvorrichtung mit einem Sensor und einer Auswerteelektronik bekannt, bei der der Sensor einen Resonator in Form eines Hohlraumresonators mit Resonatorgehäuse aufweist, wobei der Resonator eine coplanare Schlitzkopplung mit Einkopplungsleitung aufweist und die Einkopplungsleitung an dem Resonatorgehäuse abgeschlossen ist.

Aus der US 6,067,040 ist ein radarbasierendes Detektionssystem bekannt, welches einen Pulswiederholungs-Frequenzgenerator umfasst, welcher an einen ersten und einen zweiten Pulsmodulator gekoppelt ist. Es ist ein Zeitverzögerungsschaltkreis vorgesehen, um ein Ausgangssignal des zweiten Pulsmodulators an einen Empfangskanal zu verzögern. Der Empfangskanal ist dabei an den zweiten Pulsmodulator gekoppelt.

Der Erfindung liegt die Aufgabe zugrunde, einen Mikrowellen-Näherungssensor und ein Verfahren zur Bestimmung des Abstands zwischen einem Zielobjekt und einem Messkopf eines Mikrowellen-Näherungssensors der eingangs genannten Art bereitzustellen, welcher einfach aufgebaut ist bzw. welcher sich auf einfache Weise realisieren lässt.

Diese Aufgabe wird bei dem eingangs genannten Mikrowellen-Näherungssensor erfindungsgemäß dadurch gelöst, dass der Messkopf einen Sender für Mikrowellenstrahlung und einen Empfänger für Mikrowellenstrahlung aufweist, wobei an einem Zielobjekt reflektierte Mikrowellenstrahlung, welche von dem Sender auf das Zielobjekt emittiert wurde, von dem Empfänger empfangbar ist, und eine Auswertungseinrichtung aufweist, durch welche ein Abstand vom Zielobjekt zu dem Messkopf durch interferometrische Auswertung der empfangenen Mikrowellenstrahlung und der emittierten Mikrowellenstrahlung bestimmbar ist, und dass ein Phasenschieber vorgesehen ist, mittels welchem aus einem Sendesignal ein erstes Signal und ein dazu in der Phase verschobenes zweites Signal erzeugbar ist.

Die Phasenverschiebung zwischen dem ersten Signal und dem zweiten Signal ist fest und beträgt insbesondere 90°.

Der erfindungsgemäße Mikrowellen-Näherungssensor lässt sich auf einfache Weise realisieren. Durch die interferometrische Auswertung ist keine aufwendige Frequenzbestimmung notwendig. Die Auswertung lässt sich auf einfache Weise beispielsweise durch einen Mikrocontroller durchführen.

Beispielsweise ist auch keine Linearisierung eines Ansteuerungssignals für den Sender notwendig. Insbesondere muss kein linearisierter spannungsgesteuerter Oszillator verwendet werden.

Es ist ein Phasenschieber vorgesehen, mittels welchem aus einem Sendesignal ein erstes Signal und ein dazu in der Phase (insbesondere in einer vorgegebenen festen Phase wie 90°) verschobenes zweites Signal erzeugbar ist. Der Phasenschieber ist insbesondere in einem Empfangszweig angeordnet. Es lassen sich dadurch auf einfache Weise zwei unterschiedliche Auswertungssignale erzeugen, durch deren Vergleich und insbesondere Quotientenbildung der Abstand s zwischen dem Messkopf und dem Zielobjekt bestimmbar ist. Bei einer solchen Auswertung muss insbesondere der Reflexionsfaktor an dem Zielobjekt und auch eine Signallaufzeit nicht bekannt sein.

Der erfindungsgemäße Mikrowellen-Näherungssensor lässt sich auf vielfältige Weise einsetzen. Beispielsweise lässt er sich zur Detektion der Kolbenposition bzw. des Kolbenabstands bei einem hydraulischen Zylinder oder pneumatischen Zylinder einsetzen. In einem Zylinder können sich Hohlleitermoden ausbilden, die sich positiv auf die Signalqualität der empfangenen Signale auswirken, so dass die interferometrische Auswertung verbessert wird.

Der erfindungsgemäße Mikrowellen-Näherungssensor kann sowohl im Freiraum als auch in geschlossenen Räumen verwendet werden.

Durch die erfindungsgemäße Lösung lassen sich Abstände in einem Bereich zwischen Null bis 1500 mm messen. Ein besonders günstiger Bereich reicht bis ca. 100 mm. Die Auflösung liegt bei 0,1 mm oder besser.

Insbesondere liegt die Mikrowellenstrahlung in einem Frequenzbereich zwischen 300 MHz bis 300 GHz. Die entsprechende Wellenlänge liegt dann zwischen ca. 1 m und 1 mm.

Ganz besonders vorteilhaft ist es, wenn der Sender Mikrowellenstrahlung fester Frequenz oder Frequenzen emittiert. Es ist beispielsweise möglich, dass gleichzeitig oder zeitlich versetzt Signale einer ersten festen Frequenz und einer zweiten festen Frequenz emittiert werden. Die feste bzw. konstante Frequenz(en) wird dabei für einen Abstandsmessvorgang emittiert. Dadurch können sich eine auslaufende Welle und eine zurücklaufende Welle, welche durch Reflexion an dem Zielobjekt entstanden sind, zu einer stehenden Welle überlagern. Es lässt sich dadurch an dem Messkopf ein Empfangssignal generieren, welches auf einfache Weise auswertbar ist. Insbesondere ist keine Frequenzbestimmung notwendig. Es ist dabei grundsätzlich möglich, dass während eines Messzyklus, welcher sich aus unterschiedlichen getrennten Messvorgängen zusammensetzt, die feste Frequenz variiert wird, wobei bei einer solchen Variation die feste Frequenz genügend lange konstant gehalten wird, so dass sich ein messbares Signal ergibt, bevor eine andere feste Frequenz eingestellt wird.

Insbesondere ist eine Einstellungseinrichtung vorgesehen, durch die die Frequenz oder Frequenzen, in welcher Mikrowellenstrahlung emittiert wird, einstellbar und/oder schaltbar ist. Dadurch kann ein Benutzer die entsprechende gewünschte Frequenz oder Frequenzen einstellen bzw. diese kann automatisch und insbesondere gesteuert über die Auswertungseinrichtung eingestellt werden.

Vorzugsweise ist dabei eine Frequenz oder Frequenzen, mit welcher die Mikrowellenstrahlung emittiert wird, aus einer Mehrzahl von Frequenzen oder einem Frequenzbereich einstellbar. Dadurch lässt sich je nach Anwendung die optimale feste Frequenz wählen bzw. für bestimmte Anwendungen lässt sich innerhalb eines Messzyklus auch die feste Frequenz verändern.

Vorzugsweise umfasst die Einstellungseinrichtung einen spannungsgesteuerten Oszillator und/oder steuert einen spannungsgesteuerten Oszillator an. Über die Steuerungsspannung des spannungsgesteuerten Oszillators lässt sich die Frequenz der Mikrowellenstrahlung, welche von dem Sender emittiert wird, einstellen.

Bei einer Ausführungsform ist die Einstellungseinrichtung an die Auswertungseinrichtung gekoppelt. Dadurch kann über ein Detektionsergebnis, welches durch die Auswertungseinrichtung bereitgestellt ist, eine Einstellung der festen (konstanten) Frequenz erfolgen. Dadurch ist eine Rückkopplung eines Messergebnisses möglich. Beispielsweise kann so geprüft werden, ob ein Zielobjekt, welches sich bewegt, zu einem bestimmten Zeitpunkt sich in einem bestimmten Abstandsbereich befindet.

Vorteilhafterweise liegt die Frequenz der ausgesandten Mikrowellenstrahlung in einem ISM-Band und damit in einem zugelassenen Bereich.

Bei einer vorteilhaften Ausführungsform ist ein Splitter vorgesehen, mittels welchem ein Sendesignal auf einen Sendezweig und einen Empfangszweig aufteilbar ist. Es wird dann dem Sendezweig und dem Empfangszweig ein grundsätzlich gleiches Signal bereitgestellt. Das Sendesignal auf dem Sendezweig wird zur Ansteuerung des Senders verwendet, um Mikrowellenstrahlung zu emittieren. Das Sendesignal auf dem Empfangszweig wird zur Auswertung verwendet. Mit dem Sendesignal auf dem Empfangszweig lässt sich ein Vergleich zwischen dem Sendesignal und einem Empfangssignal, welches vom Empfänger bereitgestellt wird, durchführen.

Die Auswertung lässt sich auf einfache Weise durchführen, wenn der Phasenschieber ein 90°-Phasenschieber ist.

Ganz besonders vorteilhaft ist es, wenn eine Mischungseinrichtung vorgesehen ist, mittels welcher das erste Signal und ein Empfangssignal und das zweite Signal und das Empfangssignal jeweils mischbar sind und ein erstes Auswertungssignal und ein zweites Auswertungssignal erzeugbar ist. Das erste Auswertungssignal und das zweite Auswertungssignal lassen sich direkt oder nach Verarbeitung zur Berechnung des Abstands s verwenden. An der Mischungseinrichtung werden insbesondere Signale gleicher Frequenz gemischt; dadurch lässt sich ein Gleichspannungssignal erzeugen, so dass eine einfache Auswertbarkeit ermöglicht ist.

Insbesondere sind dann das erste Auswertungssignal und das zweite Auswertungssignal jeweils Gleichspannungssignale.

Es ist dann möglich, durch die Auswertungseinrichtung den Abstand zu dem Zielobjekt durch Bestimmung des Verhältnisses des ersten Ausgangssignals oder eines vom ersten Ausgangssignal abgeleiteten Signals und des zweiten Ausgangssignals oder eines vom zweiten Ausgangssignal abgeleiteten Signals zu ermitteln. Die entsprechende Berechnung lässt sich auf einfache Weise durchführen.

Es ist grundsätzlich möglich, dass während eines Messvorgangs nur eine feste Frequenz vorgegeben wird. Es kann vorteilhaft sein, wenn mehrere feste Frequenzen gleichzeitig oder nacheinander vorgegeben werden, entsprechende Signale unabhängig voneinander für die festen Frequenzen ermittelt werden und diese Signale dann verglichen werden. Insbesondere ist es günstig, wenn das erste Ausgangssignal und das zweite Ausgangssignal jeweils für eine erste Frequenz ($f_1$) und mindestens eine weitere zweite Frequenz ($f_2$) erzeugbar sind. Es kann dadurch aus dem ersten Ausgangssignal und dem zweiten Ausgangssignal für die erste Frequenz ein erster Phasenwert berechnet werden und für die zweite Frequenz ein zweiter Phasenwert berechnet werden. Die Phasenwerte können miteinander verglichen werden. Insbesondere kann eine Funktion berechnet werden, welche die Phasendifferenz in der zweiten Phase und der ersten Phase ist, wenn die erste Phase kleiner als die zweite Phase ist und die Phasendifferenz plus 360° ist, wenn die erste Phase größer als die zweite Phase ist. Diese Funktion ist in einem größeren Bereich s eindeutig. Der Eindeutigkeitsbereich ist bestimmt durch $c/(2(f_2 - f_1))$. Dadurch ist es beispielsweise möglich, über die berechnete Funktion zunächst ein Zielobjekt in einem entsprechend großen Bereich zu lokalisieren und insbesondere grob zu lokalisieren und dann über Messung mit erhöhter Auflösung die genaue Position zu bestimmen.

Der erfindungsgemäße Mikrowellen-Näherungssensor kann einen Transceiver umfassen, durch welchen der Sender ansteuerbar ist und Empfangssignale vom Empfänger aufbereitbar sind. Der Transceiver kann entsprechende Auswertungssignale einem Mikroprozessor zur weiteren Auswertung und insbesondere zur Berechnung des Abstands bereitstellen.

Mittels der Auswertungseinrichtung ist ein absoluter Abstand und/oder ein Schaltabstand zu dem Zielobjekt ermittelbar. Dadurch lässt sich die Position bzw. der Weg des Zielobjekts bestimmen bzw. ein Schaltabstand ermitteln.

Bei der erfindungsgemäßen Lösung liegt der ermittelte Abstand im Bereich zwischen (n - 1) einer halben Wellenlänge und n einer halben Wellenlänge der ausgesandten Mikrowellenstrahlung, wobei n eine natürliche Zahl ist. Innerhalb dieses Bereichs ist die Abstandsermittlung eindeutig. Wenn von einem Bereich zu einem benachbarten Bereich gewechselt wird, dann erfolgt ein Phasensprung. Durch unterschiedliche Verfahren kann auch über solche Intervalle gemessen werden. Beispielsweise kann dazu ein getrennter Abstandssensor vorgesehen werden, um zu ermitteln, in welchem Intervall man liegt. Es kann eine Referenzfahrt durchgeführt werden und Übergänge gezählt werden, um eine Intervallbestimmung (d. h. Bestimmung von n) zu ermöglichen. Es ist alternativ auch möglich, die Frequenz der ausgesandten Mikrowellenstrahlung zu variieren, um die Intervalle an sich über die Änderung der Wellenlänge zu variieren. Man erhält dann eine lineare Bestimmung des tatsächlichen Abstands, welche "geometrisch" begründet ist.

Die eingangs genannte Aufgabe wird bei dem eingangs genannten Verfahren erfindungsgemäß dadurch gelöst, dass über den Messkopf Mikrowellenstrahlung in Richtung des Zielobjekts emittiert wird und vom Zielobjekt reflektierte Mikrowellenstrahlung von dem Messkopf empfangen wird, wobei ein Abstand zum Zielobjekt über die interferometrische Auswertung der emittierten Mikrowellenstrahlung und der empfangenen Mikrowellenstrahlung bestimmt wird, und ein Sendesignal auf einen Sendezweig und einen Empfangszweig aufgeteilt wird und im Empfangszweig aus dem Sendesignal ein erstes Signal und ein dazu phasenverschobenes zweites Signal erzeugt wird.

Die Phasenbeziehung zwischen dem ersten Signal und dem zweiten Signal ist definiert und fest. Sie liegt beispielsweise bei 90°.

Ein Sendesignal auf einen Sendezweig und einen Empfangszweig wird aufgeteilt. Dadurch lässt sich das Sendesignal, welches einen Sender ansteuert, auf einfache Weise zur Auswertung verwenden.

Es wird aus dem Sendesignal ein erstes Signal und ein dazu phasenverschobenes zweites Signal erzeugt, wobei die Phasenverschiebung vorzugsweise 90° beträgt. Aus den phasenverschobenen Signalen lassen sich Ausgangssignale erzeugen, durch welche auf einfache Weise der Abstand zwischen dem Messkopf und dem Zielobjekt bestimmbar ist.

Das erfindungsgemäße Verfahren weist die bereits im Zusammenhang mit dem erfindungsgemäßen Mikrowellen-Näherungssensor erläuterten Vorteile auf.

Weitere vorteilhafte Ausgestaltungen wurden ebenfalls bereits im Zusammenhang mit dem erfindungsgemäßen Mikrowellen-Näherungssensor erläutert.

Ganz besonders vorteilhaft ist es, wenn zur Abstandsbestimmung Mikrowellenstrahlung mindestens einer festen Frequenz emittiert wird. Dadurch ist keine aufwendige Frequenzbestimmung notwendig. Es kann sich durch Überlagerung einer auslaufenden Welle und einer rücklaufenden, an dem Zielobjekt reflektierten Welle eine stehende Welle ausbilden. Dadurch ist an einem Empfänger auf einfache Weise ein entsprechendes Empfangssignal erzeugbar.

Es kann dabei vorgesehen sein, dass die mindestens eine feste Frequenz einstellbar ist, um beispielsweise während eines Messzyklus unterschiedliche konstante Frequenzen einstellen zu können.

Insbesondere wird während eines Messzyklus die feste Frequenz variiert.

Beispielsweise wird ausgehend von einer Ausgangsfrequenz die Frequenz erniedrigt und/oder erhöht. Die entsprechende Frequenzvariation dient dabei zur Einstellung des Messbereichs. Der Messbereich bei dem erfindungsgemäßen Verfahren liegt zwischen (n - 1) mal halbe Wellenlänge und n mal halbe Wellenlänge der ausgesandten Mikrowellenstrahlung, wobei n eine natürliche Zahl ist. Durch Erniedrigung der Frequenz lässt sich der Messbereich erhöhen. Durch Variation der Ausgangsfrequenz können beispielsweise unterschiedliche Messbereiche durchfahren werden, um so beispielsweise die Bewegung eines Zielobjekts verfolgen zu können.

Insbesondere wird durch Mischung mit einem Empfangssignal aus dem ersten Signal ein erstes Ausgangssignal und aus dem zweiten Signal ein zweites Ausgangssignal erzeugt. Diese Ausgangssignale sind direkt auswertbar bzw. können noch weiter bearbeitet werden.

Vorzugsweise erfolgt die Mischung derart, dass das erste Ausgangssignal und das zweite Ausgangssignal Gleichspannungssignale sind. Dadurch ist eine einfache Auswertbarkeit ermöglicht.

Es wird dann beispielsweise mittels des ersten Ausgangssignals und des zweiten Ausgangssignals über Quotientenbildung der Abstand zum Zielobjekt ermittelt. Es wird dabei direkt der Quotient zwischen dem ersten Ausgangssignal und dem zweiten Ausgangssignal eventuell unter Berücksichtigung eines jeweiligen Offsets gebildet. Es ist aber auch möglich, dass die Ausgangssignale zuerst aufbereitet werden, bevor der Quotient gebildet wird.

Es kann grundsätzlich vorgesehen sein, dass das erste Ausgangssignal und das zweite Ausgangssignal nur für eine einzige feste Frequenz bestimmt werden. Bei einer vorteilhaften Variante werden das erste Ausgangssignal und das zweite Ausgangssignal jeweils für eine erste Frequenz ($f_1$) und mindestens eine weitere zweite Frequenz erzeugt und es wird eine Phasendifferenz bezogen auf die erste Frequenz und die zweite Frequenz ($f_2$) zwischen den Phasen zwischen dem ersten Ausgangssignal und dem zweiten Ausgangssignal für die erste Frequenz und die zweite Frequenz berechnet. Diese Phasendifferenz bezogen auf die erste Frequenz und die zweite Frequenz ist ein Maß für die Position des Zielobjekts. Sie ist über einen großen Bereich, welcher durch $c/(2(f_2- f_1))$ bestimmt ist, eindeutig und insbesondere monoton. Dies kann beispielsweise dazu verwendet werden, die Position eines Zielobjekts "grob" zu lokalisieren und dann in dem entsprechenden Messbereich für den grob bestimmten Ort eine feinere Positionsmessung bzw. Positionsbestimmung durchzuführen.

Die nachfolgende Beschreibung bevorzugter Ausführungsformen dient im Zusammenhang mit den Zeichnungen der näheren Erläuterung der Erfindung. Es zeigen:

Figur 1    eine schematische Darstellung eines Ausführungsbeispiels eines erfindungsgemäßen Mikrowellen-Näherungssensors;

Figur 2    eine schematische Darstellung eines Ausführungsbeispiels eines Transceivers;

Figur 3    schematisch den Wellenverlauf bei einem Messvorgang mit dem Mikrowellen-Näherungssensor gemäß Figur 1;

Figur 4    schematisch den Verlauf der am Messkopf empfangenen Leistung;

Figur 5    schematisch den Verlauf von Ausgangssignalen;

Figur 6    schematisch die Darstellung eines Messbereichs;

Figur 7    eine schematische Darstellung eines ersten Ausführungs- beispiels einer Sender-Empfänger-Einrichtung mit getrenntem Sender und Empfänger;

Figur 8    ein zweites Ausführungsbeispiel einer Sender-Empfänger-Ein- richtung mit kombinierten Sendern und Empfängern in schematischer Darstellung; und

Figur 9    eine schematische Darstellung des Phasenverlaufs über dem Abstand zu einem Zielobjekt bei einer Variante einer Aus- führungsform.

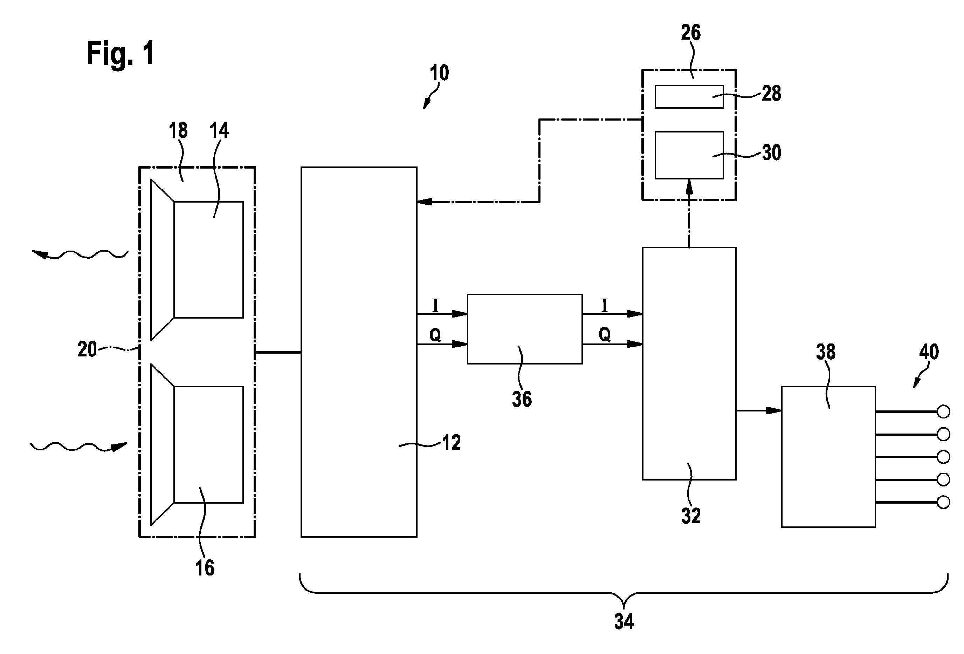

Ein Ausführungsbeispiel eines erfindungsgemäßen Mikrowellen-Näherungssensors, welcher in Figur 1 gezeigt und dort mit 10 bezeichnet ist, umfasst einen Transceiver 12, über welchen ein Sender 14 (Antenne) ansteuerbar ist. Der Sender 14 ist ein Mikrowellen-Sender, über welchen Mikrowellenstrahlung emittierbar ist. Die emittierte Mikrowellenstrahlung liegt in einem Frequenzbereich zwischen ca. 300 MHz bis 300 GHz (entsprechend einer Wellenlänge, welche zwischen 1 m und 1 mm liegt).

Der Transceiver 12 empfängt ferner Signale von einem Empfänger 16 (Antenne) zur Auswertung. Der Sender 14 und der Empfänger 16 sind dabei in einem Messkopf 18 angeordnet.

Es ist grundsätzlich möglich, dass der Sender 14 und der Empfänger 16 getrennte Antennen sind, d. h. der Sender 14 nur Sendefunktion hat und der Empfänger 16 nur Empfangsfunktion.

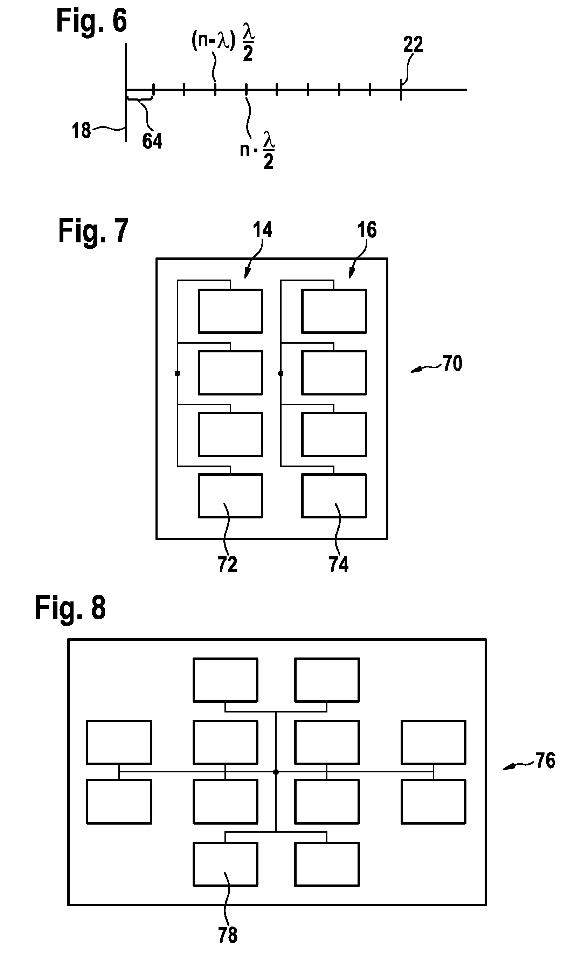

Bei einem Ausführungsbeispiel einer entsprechenden Sender-Empfänger-Einrichtung 70 (Figur 7) ist der Sender 14 durch eine Mehrzahl von Patchfeldern 72 gebildet, welche parallel zueinander angeordnet sind und von dem gleichen Sendesignal angesteuert werden. Der Empfänger 16 ist ebenfalls aus einer Mehrzahl von Patchzellen 74 gebildet, welche parallel zueinander angeordnet sind. Die Patchfelder 72 und 74 sind dabei vorzugsweise gleich ausgebildet und parallel angeordnet.

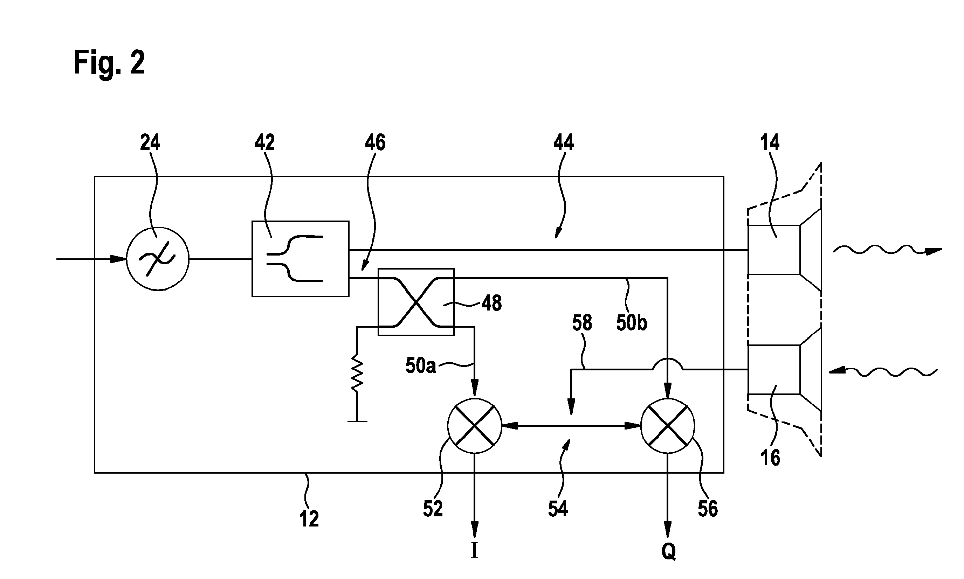

Bei einer alternativen Ausführungsform einer Sender-Empfänger-Einrichtung 76, welche in Figur 8 gezeigt ist und welche in Figur 2 in durchbrochenen Linien angedeutet ist, sind eine Mehrzahl von Patchfeldern 78 vorgesehen, welche parallel verschaltet sind. Diese Patchfelder 78 weisen sowohl Sendefunktion als auch Empfangsfunktion auf. Die Sender-Empfänger-Einrichtung 76 lässt sich platzsparend realisieren.

Die Sender-Empfänger-Einrichtung 70 mit getrenntem Sender 14 und getrenntem Empfänger 16 weist eine Übersprechrate auf (der Signalempfang, der darauf zurückzuführen ist, dass Mikrowellenstrahlung vom Sender 14 direkt vom Empfänger 16 empfangen wird), die kleiner ist als für die Sender-Empfänger-Einrichtung 76. Die sensorwirksame Fläche der Sender-Empfänger-Einrichtung 76, bei welcher die Patchfelder 78 sowohl Sendefunktion als auch Empfangsfunktion haben, ist groß. Allerdings ist die Übersprechrate bei der Sender-Empfänger-Einrichtung 76 auch groß.

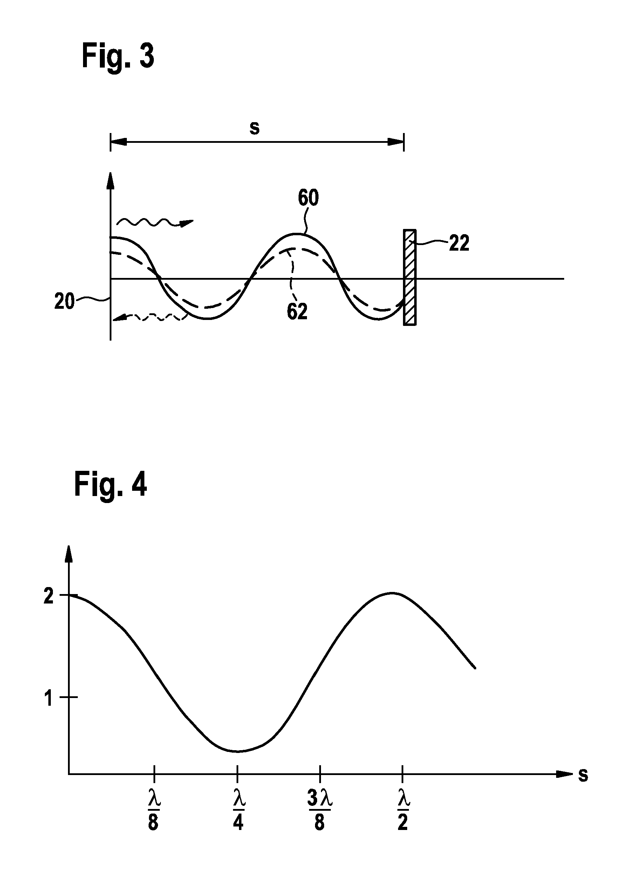

Der Messkopf 18 weist eine Vorderseite 20 auf. Die Vorderseite 20 ist insbesondere eben ausgebildet. Sie stellt eine Wirkfläche für die Abstandsmessung bereit. Über den Mikrowellen-Näherungssensor 10 ist ein Abstand s zwischen der Vorderseite 20 und einem Zielobjekt 22 (Target), an welchem Mikrowellenstrahlung reflektiert wird, feststellbar (Figur 3).

Der Sender 14 wird über den Transceiver 12 angesteuert. Insbesondere ist zur Ansteuerung des Senders 14 ein spannungsgesteuerter Oszillator 24 (VCO) vorgesehen (Figur 2). Über die Spannung, mit welcher der spannungsgesteuerte Oszillator 24 beaufschlagt wird, wird die Sendefrequenz der Mikrowellenstrahlung, welche durch den Sender 14 emittiert wird, eingestellt.

Bei einem Messvorgang emittiert der Sender 14 Mikrowellenstrahlung einer festen Frequenz. Es kann dabei Mikrowellenstrahlung mit einer einzigen festen Frequenz oder mit mehreren festen Frequenzen und insbesondere einer ersten festen Frequenz und einer zweiten festen Frequenz emittiert werden. Die Spannung, mit welcher der spannungsgesteuerte Oszillator 24 bei einem entsprechenden Messvorgang angesteuert wird, bleibt dann konstant. (Es ist dabei möglich, dass während eines Messzyklus die Frequenz der Mikrowellenstrahlung, welche durch den Sender 14 emittiert wird, variiert wird; dies wird weiter unten noch erläutert.)

Zur Einstellung der festen Frequenz(en) ist eine Einstellungseinrichtung 26 vorgesehen, welche an den Transceiver 12 und insbesondere den spannungsgesteuerten Oszillator 24 gekoppelt ist.

Die Einstellungseinrichtung 26 kann einen Schalter 28 beispielsweise in Form eines Potentiometers umfassen, über welchen die Sendefrequenz manuell einstellbar ist. Alternativ oder zusätzlich ist eine Stelleinrichtung 30 vorgesehen, welche beispielsweise in Form eines Digital-Analog-Umsetzers (DAC) ausgebildet ist.

Die Stelleinrichtung 30 ist an einen Mikroprozessor 32 gekoppelt, welcher der Stelleinrichtung 30 entsprechende Signale bereitstellt, über welche wiederum die Spannung, mit welcher der spannungsgesteuerte Oszillator 24 angesteuert wird, eingestellt wird. Der Mikroprozessor 32 ist dabei Teil einer Auswertungseinrichtung 34 des Mikrowellen-Näherungssensors 10. Über die Kombination des Mikroprozessors 32 mit der Stelleinrichtung 30 lässt sich in Abhängigkeit eines Detektionsergebnisses eine feste Sendefrequenz für den Sender 14 einstellen.

Der Transceiver 12 ist mit dem Mikroprozessor 32 direkt oder über eine Signalaufbereitungseinrichtung 36 verbunden. In der Signalaufbereitungseinrichtung 36 werden, falls notwendig, die von dem Transceiver 12 bereitgestellten Auswertungssignale aufbereitet bzw. angepasst und an den Mikroprozessor 32 weitergeleitet. Es ist grundsätzlich auch möglich, dass die Auswertungssignale des Transceivers 12 direkt an den Mikroprozessor 32 übergeben werden.

Die Signalaufbereitungseinrichtung 36 kann als Tiefpass ausgebildet sein. Dadurch lässt sich Rauschen herausfiltern. Weiterhin können Frequenzanteile, die durch Dopplereffekt bei bewegten Zielobjekten 22 erzeugt werden, eliminiert werden. Die Grenzfrequenz eines solchen Tiefpasses sollte nicht zu niedrig gewählt werden, um die dynamischen Eigenschaften des Mikrowellen-Näherungssensors nicht zu stark einzuschränken.

Der Mikrowellen-Näherungssensor 10 umfasst eine an den Mikroprozessor 32 gekoppelte Endstufe 38, welche Ausgänge 40 des Mikrowellen-Näherungssensors 10 ansteuert. Die Endstufe dient beispielsweise als Kurzschlussschutz, Verpolungsschutz und Überspannungsschutz für die Sensorelektronik. Mögliche Ausgänge 40 des Mikrowellen-Näherungssensors 10 sind beispielsweise ein analoger Signalausgang, ein digitaler Signalausgang und ein Busausgang.

Die Endstufe 38 weist ferner Spannungseingänge auf.

Der Transceiver 12 umfasst, wie in Figur 2 gezeigt, zusätzlich zu dem spannungsgesteuerten Oszillator 24 einen Splitter 42, mittels welchem ein von dem spannungsgesteuerten Oszillator 24 bereitgestelltes Sendesignal auf einen Sendezweig 44 und einen Empfangszweig 46 aufteilbar ist. Die Aufteilung erfolgt dabei bevorzugterweise mit gleicher Signalstärke.

Der Sender 14 ist an den Sendezweig 44 angeschlossen. Das entsprechende Signal bewirkt die Erzeugung von Mikrowellenstrahlung an dem Sender 14 mit der vorgegebenen (durch die Spannung, mit welcher der spannungsgesteuerte Oszillator 24 angesteuert wird) Frequenz.

Der Empfangszweig 46 umfasst einen Phasenschieber 48. Über den Phasenschieber 48 wird das Signal, welches von dem Splitter 42 dem Empfangszweig 46 bereitgestellt wird, in ein erstes Signal 50a und ein zweites Signal 50b aufgeteilt, wobei das erste Signal 50a und das zweite Signal 50b zueinander phasenverschoben sind. Vorzugsweise liegt die Phasenverschiebung bei 90°. An einem ersten Ausgang des Phasenschiebers 48 steht dadurch das erste Signal 50a und an einem zweiten Ausgang das zweite Signal 50b an.

Der erste Ausgang des Phasenschiebers 48 ist dabei mit einem ersten Mischer 52 einer Mischungseinrichtung 54 verbunden. Der zweite Ausgang des Phasenschiebers 48 ist mit einem zweiten Mischer 56 der Mischungseinrichtung 54 verbunden.

Der Empfänger 16 stellt im Empfangszweig 46 ein Empfangssignal 58 der Mischungseinrichtung 54 und dabei dem ersten Mischer 52 und dem zweiten Mischer 56 bereit.

Aus dem ersten Signal 50a wird dadurch ein erstes Empfangssignal I erzeugt und aus dem zweiten Signal 50b wird durch Mischung mit dem Empfangssignal 58 ein zweites Empfangssignal Q erzeugt.

Die Mischungseinrichtung 54 ist dabei bevorzugterweise so ausgebildet, dass Gleichspannungssignale bereitstellbar sind. Wenn das Empfangssignal und das Sendesignal die gleiche Frequenz haben, wird ein Gleichspannungssignal bereitgestellt.

Das erste Empfangssignal I und das zweite Empfangssignal Q werden von dem Transceiver 12 dem Mikroprozessor 32 direkt oder über die Signalbearbeitungseinrichtung 36 bereitgestellt.

Als die mindestens eine feste Frequenz, mit welcher der Sender 14 sendet, wird insbesondere eine Frequenz aus einem ISM-Band gewählt (ISM - industrial, scientific and medical band).

Das erfindungsgemäße Verfahren funktioniert wie folgt:

Über den Messkopf 18 wird Mikrowellenstrahlung auf das Zielobjekt 22 gerichtet. Der Sender 14 und der Empfänger 16 haben dann im Wesentlich den gleichen Abstand zu dem Zielobjekt 22. Von dem Messkopf 18 ausgehend bildet sich eine auslaufende Welle 60 (Figur 3), welche an dem Zielobjekt 22 reflektiert wird. Es bildet sich eine zurücklaufende Welle 62. Die auslaufende Welle 60 und die zurücklaufende Welle 62 überlagern sich zu einer stehenden Welle. Die Amplitude der stehenden Welle am Empfänger 16 ist abhängig von dem Abstand s zwischen dem Messkopf 18 und dem Zielobjekt 22. Wenn die auslaufende Welle 60 eine Sinus-Welle ist und die zurücklaufende Welle 62 ebenfalls eine Sinus-Welle ist, dann ist die von dem Empfänger 16 empfangene Leistung

$$E_{res}(0)^2 = E_0^2 \left(1 + r^2 + 2r \cos(2ks)\right) \quad (1).$$

Dabei ist $E_0$ die Feldstärkeamplitude der auslaufenden Welle 60, r ist der Reflexionsfaktor an dem Zielobjekt 22 und

$$k = 2\pi/\lambda \quad (2)$$

ist die Wellenzahl; $\lambda$ ist die Wellenlänge der auslaufenden Welle 60. Die Frequenz der auslaufenden Welle 60 und der zurücklaufenden Welle 62 ist gleich.

In Figur 4 ist der Verlauf der empfangenen Leistung in Abhängigkeit des Abstands s gezeigt. Diese Leistung weist ein Maximum bei $s = 0$ und $s = \lambda/2$ und ein Minimum bei $s = \lambda/4$ auf.

An der Mischungseinrichtung 54 wird das Empfangssignal 58 mit dem ersten Signal 50a und getrennt davon mit dem zweiten Signal 50b gemischt. Durch das Mischen von jeweils zwei Signalen mit gleicher Frequenz lässt sich das Gleichspannungssignal I und das Gleichspannungssignal Q erzeugen.

Das I-Signal ergibt sich zu

$$I = A \cdot \cos\left(\frac{4\pi}{\lambda} \cdot s\right) + I_0 \quad (3)$$

mit einem Offset $I_0$ ("Leerlaufwert") bei $s = \lambda/8$ oder bei $s \to \infty$ (mit $A \to 0$).

Das Q-Signal ergibt sich zu

$$Q = A \cdot \sin\left(\frac{4\pi}{\lambda} \cdot s\right) + Q_0 \quad (4)$$

mit einem Offset $Q_0$ bei s = 0 oder s → ∞ (mit A → 0). Die beiden Signale I und Q sind dabei um 90° phasenverschoben.

Die Offsets $I_0$ und $Q_0$ können technisch bedingt temperaturabhängig sein. Eine solche Temperaturabhängigkeit lässt sich dadurch kompensieren, dass temperaturbezogene Referenzwerte für $I_0$ und $Q_0$ abgespeichert sind (beispielsweise in dem Mikroprozessor 32). Im Betrieb wird dann von dem Mikroprozessor 32 die vorliegende Temperatur gemessen und bei der Auswertung (gemäß Formeln (3) und (4) werden die zu der jeweiligen Temperatur gehörenden Werte von $I_0$ und $Q_0$ verwendet.

Daraus ergibt sich der Abstand s zu

$$s = \frac{\lambda}{4\pi} \arctan\left(\frac{Q - Q_0}{I - I_0}\right) \quad (5).$$

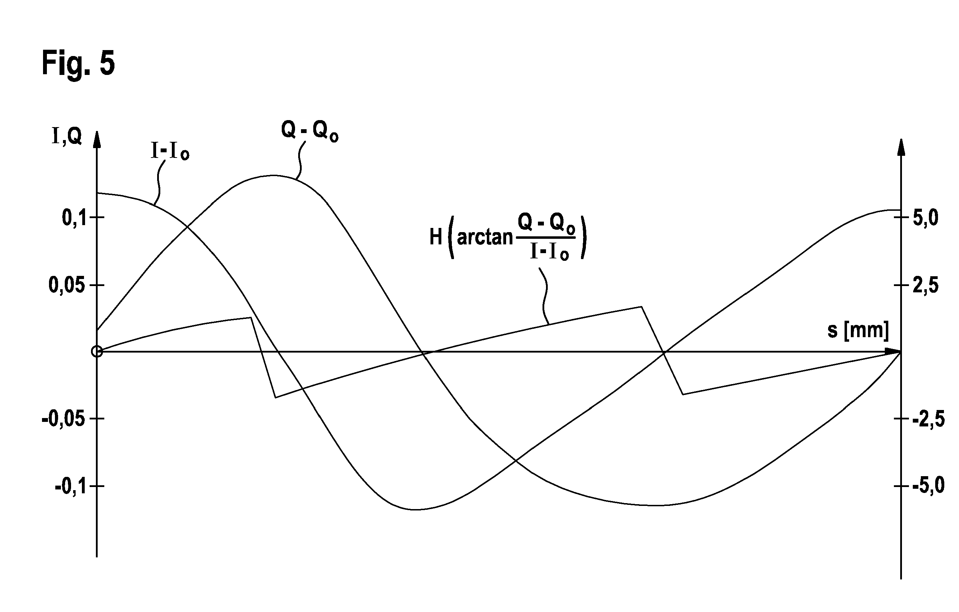

Die entsprechenden Abhängigkeiten von I - $I_0$, Q - $Q_0$ und des Hauptwerts von $\arctan\left(\frac{Q - Q_0}{I - I_0}\right)$ sind in Figur 5 bezeigt. Der Hauptwert des Arcustangens liegt im Bereich von $\pm\pi/2$. Um Eindeutigkeit im Bereich zwischen s = (n - 1) $\frac{\lambda}{2}$ und s = n $\lambda/2$ zu erhalten (wobei n eine natürliche Zahl ist), wird mit Hilfe der Auswertungssignale I und Q durch Fallunterscheidung (Vorzeichenprüfung) eine korrigierte Phase bestimmt, welche im Bereich 0 und $2\pi$ liegt (sogenannte "arctan2"-Funktion). Dadurch lässt sich der Abstand s eindeutig im Bereich zwischen (n - 1) $\frac{\lambda}{2}$ und n · $\frac{\lambda}{2}$ bestimmen.

Wenn beispielsweise als feste Frequenz eine Frequenz von 2 GHz gewählt wird, dann liegt der Abstandsbereich [0 ... $\lambda/2$] zwischen 0 und ca. 75 mm.

Durch die erfindungsgemäße Lösung lässt sich auf einfache Weise der Abstand s ermitteln. Es ist keine aufwendige Frequenzbestimmung aus einem Mischerausgangssignal notwendig.

Die Berechnung von I - $I_0$ und Q - $Q_0$, die Quotientenbildung sowie die Berechnung der Arcustangensfunktion zur Bestimmung des Wegs s lässt sich auf einfache Weise mit dem Mikroprozessor 32 durchführen.

Es ist grundsätzlich auch keine Linearisierung des spannungsgesteuerten Oszillators 24 notwendig.

Der erfindungsgemäße Mikrowellen-Näherungssensor 10 ist beispielsweise einsetzbar, um die Bewegung und/oder Position eines Kolbens eines Hydraulikzylinders zu detektieren. In diesem Fall ist das Zielobjekt 22 entsprechend der Kolben. Der erfindungsgemäße Mikrowellen-Näherungssensor ist in diesem Fall innerhalb eines Zylindergehäuses angeordnet. Das von dem Mikrowellensensor erzeugte Mikrowellenfeld kann ein metallisches Zylindergehäuse nicht durchdringen. Die Arbeitsfrequenz ist dadurch grundsätzlich frei wählbar.

Die Auswertungseinrichtung 34 ermittelt den Abstand s interferometrisch. Der Auswertung liegt die Ausbildung einer stehenden Welle durch Überlagerung der auslaufenden Welle 60 und der zurücklaufenden Welle 62 (durch Reflexion an dem Zielobjekt 22) zugrunde. Ohne dass der Reflexionsfaktor r explizit bekannt sein muss, lässt sich über die Erzeugung des ersten Signals 50a und des zweiten Signals 50b, welche zueinander phasenverschoben sind, der Abstand s bestimmen.

Es ist dabei grundsätzlich möglich, dass innerhalb des Bereichs von 0 bis $\lambda/2$ der Abstand s absolut bestimmt wird und/oder ein Schaltabstand bestimmt wird. Im letzteren Fall funktioniert der Mikrowellen-Näherungssensor 10 insbesondere als Mikrowellen-Näherungsschalter, welcher ein Schaltsignal NC (normally closed - Öffner) oder NO (normally open - Schließer) bei Erreichen eines bestimmten Schaltabstands durch das Zielobjekt 22 abgibt.

Durch die Einstellungseinrichtung 26 ist manuell (über den Schalter 28) oder über die Stelleinrichtung 30 gesteuert über den Mikroprozessor 32 die feste Frequenz, mit welcher der Sender 14 sendet, auch während eines Messzyklus einstellbar. Während eines Messzyklus können unterschiedliche Frequenzen eingestellt werden. Es ist dabei grundsätzlich so, dass bei einer einzelnen Abstandsmessung die Frequenz konstant gehalten wird, so dass sich eine stehende Welle ausbilden kann und eine interferometrische Auswertung möglich ist. Das Einstellen unterschiedlicher fester Frequenzen dient nur dazu, den Messbereich zu verändern. Das Messprinzip, nämlich die interferometrische Auswertung, darf durch die Frequenzvariation nicht beeinflusst werden.

Beispielsweise wird bei einem Anwendungsfall von einer höheren Frequenz mit einem kleineren detektierbaren Abstand s ausgegangen. Der entsprechende Messbereich ist in Figur 6 mit dem Bezugszeichen 64 angedeutet. Die Frequenz wird dann so lange erhöht, bis ein detektierbares Abstandssignal vorliegt. Die Frequenz wird dabei so langsam erhöht, d. h. eine Frequenz wird so lange konstant gehalten, dass sich bezogen auf eine feste Frequenz eine stehende Welle ausbilden kann und ein auswertbares I-Signal und Q-Signal erzeugt werden.

Durch dieses Verfahren kann man beispielsweise bei einem sich bewegenden Zielobjekt 22 erkennen, in welchem Abstandsbereich und dann in welchem Abstand es sich zu dem Messkopf 18 befindet.

Grundsätzlich ist die Messung innerhalb eines Intervalls [(n - 1) λ/2; n λ/2] eindeutig. Über Intervallgrenzen treten Phasensprünge auf. Wenn beispielsweise bei einer Referenzfahrt Intervalle gezählt werden (beispielsweise durch Zählen der Phasensprünge), kann man bei einer konkreten Messung auch das konkrete Intervall auswählen. Ein Intervall kann auch über einen zusätzlichen Positionssensor/Wegsensor ausgewählt werden. Wie oben erwähnt ist auch eine Intervallauswahl (über Intervalländerung) durch Frequenzänderung möglich.

Durch eine entsprechende Frequenzeinstellung ist es beispielsweise auch möglich, durch Bewegung eines sich bewegenden Zielobjekts 22 zu beobachten. Wenn die Frequenz variiert wird, wobei die Variation immer so langsam ist, dass sich eine stehende Welle ausbilden kann und eine interferometrische Auswertung möglich ist, dann kann überprüft werden, ob sich während des Zielobjekts 22 dieses sich in einem bestimmten Abstandsbereich zu dem Messkopf 18 befindet.

Es ist beispielsweise auch möglich, mit mehreren und insbesondere mit zwei festen Frequenzen zu arbeiten. Die entsprechenden Signale werden gleichzeitig oder zeitlich nacheinander emittiert. Es gelten dabei folgende Beziehungen, wobei m eine natürliche Zahl ist: (wenn mit zwei festen Frequenzen $f_m$ gearbeitet wird, dann ist m = 1,2)

$\varphi_m$ ist dabei die Phase zwischen dem ersten Empfangssignal Im und dem zweiten Empfangssignal Qm jeweils für die Frequenz $f_m$.

In Figur 1 sind Phasen $\varphi_1$ und $\varphi_2$ für ein Ausführungsbeispiel gezeigt, bei welchem $f_1$ 1 GHz beträgt und $f_2$ 1,38 GHz beträgt.

Aus den Phasen $\varphi_1$ und $\varphi_2$ wird eine Funktion A wie folgt berechnet:

$$A = \begin{cases} \varphi_2 - \varphi_1, & \text{wenn } \varphi_1 < \varphi_2 \\ \varphi_2 - \varphi_1 + 360°, & \text{wenn } \varphi_1 > \varphi_2 \end{cases}$$

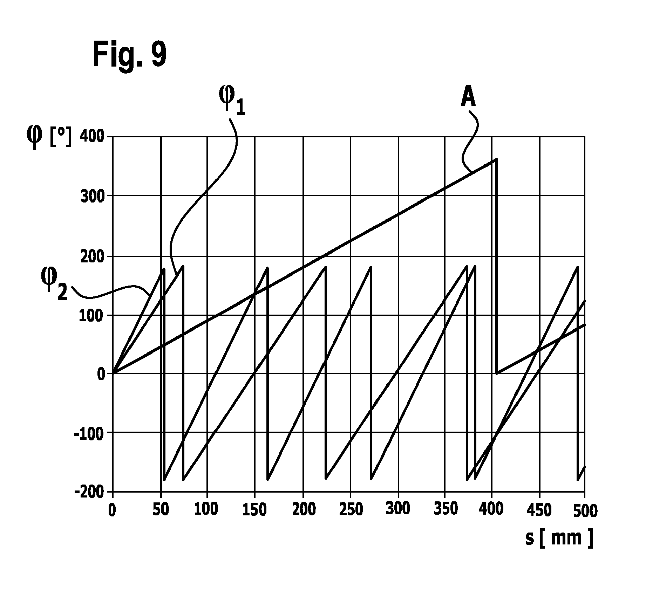

In Figur 9 ist die berechnete Funktion A ebenfalls eingezeichnet. Man erkennt, dass das Signal A für einen größeren Wertebereich eindeutig ist als die Phasenwerte $\varphi_1$ und $\varphi_2$.

Die maximal mittelbare Wegmessstrecke ergibt sich aus:

$$s_{max} = \frac{c}{2(f_2 - f_1)}$$

Wenn entsprechend $s_{max}$ vorgegeben wird, dann muss die Differenz der Frequenzen $f_2 - f_1$ geeignet gewählt werden bzw. bei Vorgabe der Frequenz $f_1$ ist dann die Frequenz $f_2$ vorbestimmt.

Wenn die Auswertung mit zwei festen Frequenzen, d. h. einer ersten festen Frequenz $f_1$ und einer zweiten festen Frequenz $f_2$, erfolgt und entsprechend aus den Phasen A wie oben berechnet wird, dann ergibt sich über einen entsprechend großen Bereich $s_{max}$ eine eindeutige Abhängigkeit und insbesondere monotone Abhängigkeit zwischen A und s. Dies kann beispielsweise dazu benutzt werden, die Position des Zielobjekts innerhalb des Bereichs $s_{max}$ zu bestimmen und dabei eine Art von "Grobbestimmung" durchzuführen. Es kann dann eine Auswertung mit erhöhter Genauigkeit in dem Bereich erfolgen, welcher zuvor eingegrenzt wurde. In diesem Bereich kann dann grundsätzlich nur eine Auswertung anhand der Frequenz $f_1$ oder anhand der Frequenz $f_2$ erfolgen, oder es kann eine Auswertung beider Frequenzen ohne Kombination erfolgen, wobei dann beispielsweise die Ergebnisse verglichen werden können.

Bei einem konkreten Ausführungsbeispiel, bei dem die Frequenz $f_1$ GHz beträgt und die Frequenz $f_2$ 1,38 GHz beträgt, liegt $s_{max}$ bei ca. 405 mm.

Der erfindungsgemäße Mikrowellen-Näherungssensor ist ein Hochfrequenz-Positions-/Wegsensor, mit dem sich die Annäherung bzw. die Position des Zielobjekts 22 relativ zu dem Messkopf 18 detektieren lässt.

**Patentansprüche**

1. Mikrowellen-Näherungssensor, umfassend einen Messkopf (18), an welchem ein Sender (14) für Mikrowellenstrahlung und ein Empfänger (16) für Mikrowellenstrahlung angeordnet sind, wobei an einem Zielobjekt (22) reflektierte Mikrowellenstrahlung, welche von dem Sender (14) auf das Zielobjekt (22) emittiert wurde, von dem Empfänger (16) empfangbar ist, eine Auswertungseinrichtung (34), durch welche ein Abstand (s) vom Zielobjekt (22) zu dem Messkopf (18) durch interferometrische Auswertung der empfangenen Mikrowellenstrahlung und der emittierten Mikrowellenstrahlung bestimmbar ist, und einen Phasenschieber (48), mittels welchem aus einem Sendesignal ein erstes Signal (50a) und ein dazu in der Phase verschobenes zweites Signal (50b) erzeugbar ist.

2. Mikrowellen-Näherungssensor nach Anspruch 1, **dadurch gekennzeichnet, dass** die Mikrowellenstrahlung in einem Frequenzbereich zwischen 300 MHz bis 300 GHz liegt.

3. Mikrowellen-Näherungssensor nach Anspruch 1 oder 2, **dadurch gekennzeichnet, dass** der Sender (14) Mikrowellenstrahlung fester Frequenz oder fester Frequenzen emittiert.

4. Mikrowellen-Näherungssensor nach Anspruch 3, **gekennzeichnet durch** eine Einstellungseinrichtung (26), **durch** die die Frequenz oder Frequenzen, in welcher Mikrowellenstrahlung emittiert wird, einstellbar und/oder schaltbar ist und insbesondere aus einer Mehrzahl von Frequenzen oder einem Frequenzbereich eine Frequenz oder Frequenzen, mit welcher die Mikrowellenstrahlung emittiert wird, einstellbar ist.

5. Mikrowellen-Näherungssensor nach einem der vorangehenden Ansprüche, **dadurch gekennzeichnet, dass** die Frequenz oder Frequenzen der ausgesandten Mikrowellenstrahlung in einem ISM-Band liegt.

6. Mikrowellen-Näherungssensor nach einem der vorangehenden Ansprüche, **gekennzeichnet durch** einen Splitter (42), mittels welchem ein Sendesignal auf einen Sendezweig (44) und einen Empfangszweig (46) aufteilbar ist.

7. Mikrowellen-Näherungssensor nach einem der vorangehenden Ansprüche, **gekennzeichnet durch** eine Mischungseinrichtung (54), mittels welcher das erste Signal (50a) und ein Empfangssignal (58) und das zweite Signal (50b) und das Empfangssignal (58) jeweils mischbar sind und ein erstes Auswertungssignal (I) und ein zweites Auswertungssignal (Q) erzeugbar ist, wobei insbesondere das erste Auswertungssignal (I) und das zweite Auswertungssignal (Q) jeweils Gleichspannungssignale sind.

8. Mikrowellen-Näherungssensor nach Anspruch 7, **dadurch gekennzeichnet, dass** durch die Auswertungseinrichtung (34) der Abstand (s) zu dem Zielobjekt (22) durch Bestimmung des Verhältnisses des ersten Ausgangssignals (I) oder eines vom ersten Ausgangssignal (I) abgeleiteten Signals und des zweiten Ausgangssignals (Q) oder eines vom zweiten Ausgangssignal (Q) abgeleiteten Signals ermittelbar ist.

9. Mikrowellen-Näherungssensor nach einem der vorangehenden Ansprüche, **gekennzeichnet durch** einen Transceiver (12), **durch** welchen der Sender (14) ansteuerbar ist und Empfangssignale (58) vom Empfänger (16) aufbereitbar sind.

10. Mikrowellen-Näherungssensor nach einem der Ansprüche 7 bis 9, **dadurch gekennzeichnet, dass** das erste Ausgangssignal ($I_1$, $I_2$) und das zweite Ausgangssignal ($Q_1$, $Q_2$) jeweils für eine erste Frequenz ($f_1$) und mindestens eine zweite Frequenz ($f_2$) erzeugbar sind.

11. Mikrowellen-Näherungssensor nach einem der vorangehenden Ansprüche, **dadurch gekennzeichnet, dass** der ermittelte Abstand (s) im Bereich zwischen (n - 1) einer halben Wellenlänge und n mal einer halben Wellenlänge der ausgesandten Mikrowellenstrahlung liegt, wobei n eine natürliche Zahl ist.

12. Verfahren zur Bestimmung des Abstands zwischen einem Zielobjekt und einem Messkopf eines Mikrowellen-Näherungssensors, bei dem über den Messkopf Mikrowellenstrahlung in Richtung des Zielobjekts emittiert wird und vom Zielobjekt reflektierte Mikrowellenstrahlung von dem Messkopf empfangen wird, wobei ein Abstand zum Zielobjekt über interferometrische Auswertung der emittierten Mikrowellenstrahlung und der empfangenen Mikrowellenstrahlung bestimmt wird, und ein Sendesignal auf einen Sendezweig und einen Empfangszweig aufgeteilt wird und im Empfangszweig aus dem Sendesignal ein erstes Signal und ein dazu phasenverschobenes zweites Signal erzeugt wird.

13. Verfahren nach Anspruch 12, **dadurch gekennzeichnet, dass** durch Mischung mit einem Empfangssignal aus dem ersten Signal ein erstes Ausgangssignal und aus dem zweiten Signal ein zweites Ausgangssignal erzeugt wird.

14. Verfahren nach Anspruch 13, **dadurch gekennzeichnet, dass** mittels des ersten Ausgangssignals und des zweiten Ausgangssignals über Quotientenbildung der Abstand zum Zielobjekt ermittelt wird.

15. Verfahren nach Anspruch 13 oder 14, **dadurch gekennzeichnet, dass** das erste Ausgangssignal und das zweite Ausgangssignal jeweils für eine erste Frequenz und mindestens eine zweite Frequenz erzeugt werden und eine Phasendifferenz bestimmt wird zwischen den Phasen zwischen dem ersten Ausgangssignal und dem zweiten Ausgangssignal für die erste Frequenz und die zweite Frequenz.

Fig. 1

EP 2 031 417 A1

Fig. 2

**Fig. 3**

**Fig. 4**

Fig. 5

**Fig. 6**

$(n-\lambda)\,\dfrac{\lambda}{2}$

22

18

64

$n \cdot \dfrac{\lambda}{2}$

**Fig. 7**

14    16

70

72    74

**Fig. 8**

76

78

# Fig. 9

Europäisches Patentamt
European Patent Office
Office européen des brevets

## EUROPÄISCHER RECHERCHENBERICHT

**Nummer der Anmeldung**

EP 08 16 3230

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 44 07 369 A1 (GRIESHABER VEGA KG [DE]) 14. September 1995 (1995-09-14) * Seite 2, Zeile 3 - Seite 3, Zeile 46 * * Seite 7, Zeile 58 - Seite 9, Zeile 45; Abbildung 2 * ----- | 1-3,5-9, 11-14 | INV. G01S13/38 G01S7/35 ADD. G01S7/288 |
| X | EP 0 933 648 A (CHL NETHERLANDS BV [NL]) 4. August 1999 (1999-08-04) * Absätze [0006], [0013], [0015] - [0018], [0023] - [0034]; Abbildungen 2,3 * ----- | 1-15 | |
| X | US 5 596 325 A (MAAS STEPHEN A [US]) 21. Januar 1997 (1997-01-21) * das ganze Dokument * ----- | 1-7,9-13 | |
| A | US 4 851 851 A (HANE BENGT [SE]) 25. Juli 1989 (1989-07-25) * das ganze Dokument * ----- | 1-15 | |
| A | US 5 923 284 A (ARTIS JEAN-PAUL [FR] ET AL) 13. Juli 1999 (1999-07-13) * Spalte 1, Zeilen 37-67 * * Spalte 3, Zeilen 16-23; Abbildungen 3,4 * * Spalte 5, Zeilen 10-16 * ----- | 1-15 | **RECHERCHIERTE SACHGEBIETE (IPC)** G01S |

Der vorliegende Recherchenbericht wurde für alle Patentansprüche erstellt

| Recherchenort | Abschlußdatum der Recherche | Prüfer |
|---|---|---|
| München | 21. Januar 2009 | Schmelz, Christian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...................................................................
& : Mitglied der gleichen Patentfamilie, übereinstimmendes Dokument

EPO FORM 1503 03.82 (P04C03)

# EP 2 031 417 A1

**ANHANG ZUM EUROPÄISCHEN RECHERCHENBERICHT
ÜBER DIE EUROPÄISCHE PATENTANMELDUNG NR.**

EP 08 16 3230

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-01-2009

| Im Recherchenbericht angeführtes Patentdokument | Datum der Veröffentlichung | Mitglied(er) der Patentfamilie | Datum der Veröffentlichung |
|---|---|---|---|
| DE 4407369 A1 | 14-09-1995 | KEINE | |
| EP 0933648 A | 04-08-1999 | NL 1008087 C2 | 26-07-1999 |
| US 5596325 A | 21-01-1997 | KEINE | |
| US 4851851 A | 25-07-1989 | EP 0248878 A1<br>JP 63502132 T<br>SE 456867 B<br>SE 8505889 A<br>WO 8703697 A1 | 16-12-1987<br>18-08-1988<br>07-11-1988<br>13-06-1987<br>18-06-1987 |
| US 5923284 A | 13-07-1999 | DE 69714956 D1<br>DE 69714956 T2<br>EP 0849607 A1<br>ES 2183108 T3<br>FR 2757639 A1<br>JP 4045626 B2<br>JP 10197626 A | 02-10-2002<br>24-04-2003<br>24-06-1998<br>16-03-2003<br>26-06-1998<br>13-02-2008<br>31-07-1998 |

EPO FORM P0461

Für nähere Einzelheiten zu diesem Anhang : siehe Amtsblatt des Europäischen Patentamts, Nr.12/82

19

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004062801 A1
- DE 19833220 A1
- DE 10205904
- DE 19903183 A1
- DE 19807593 A1
- EP 1000314 B1
- US 6067040 A